# EUROPÄISCHE PATENTANMELDUNG

(11) **EP 4 843 819 A1**
(43) Veröffentlichungstag der Anmeldung: **25.11.2026**
(21) Anmeldenummer: 25315169.0
(22) Anmeldetag: 20.05.2025
(51) Int. Cl.: B60L 53/62, B60L 53/63, B60L 55/00, H02J 3/32, H02J 7/34

(54) **LADEEINRICHTUNG, LADE-UND VERSORGUNGSSYSTEM UND VERFAHREN ZUM BIDIREKTIONALEN LADEN VON ELEKTROFAHRZEUGEN**

(71) Anmelder: HAGER-ELECTRO SAS, 67210 Obernai (FR)
(72) Erfinder: Reiner, Ulrich, 67691 HOCHSPEYER (DE); Raubuch, Sebastian, 66663 MERZIG (DE)
(74) Vertreter: Ipsilon

(57) **Zusammenfassung**

Bidirektionale Ladeeinrichtung (107,108), die an eine Hausinstallation 81039 angeschlossen ist und die eine Ladestation (108) aufweist, die dazu eingerichtet ist,
- um in einer ersten Betriebsart ein an die Ladestation angeschlossenes Elektrofahrzeug (111) mit 3-phasigem Wechselstrom zu laden,
- um bei Empfang eines Steuersignals einen Netztrennschalter (107) zu betätigen und in eine zweite Betriebsart umzuschalten, in der das Elektrofahrzeug einen Pufferspeicher mit elektrischer Energie versorgt,
- um, wenn der Pufferspeicher einen vorbestimmten Ladezustand erreicht hat, in eine dritte Betriebsart umzuschalten, in der alle drei Phasen der Hausinstallation (103) mit elektrischer Energie aus dem Elektrofahrzeug versorgt werden, um elektrische Energie für an die Hausinstallation angeschlossene Verbraucher bereitzustellen.

## Beschreibung

### Gebiet

Die Erfindung betrifft ein elektrisches Lade- und Versorgungssystem zum Laden und Entladen von Elektrofahrzeugen, insbesondere eine bidirektionale Ladeeinrichtung für Elektrofahrzeuge sowie ein Verfahren zum Betrieb einer bidirektionalen Ladeeinrichtung.

### Hintergrund

Die vorliegende Offenlegung bezieht sich auf eine bidirektionale Ladeinfrastruktur für Elektrofahrzeuge (EV) und ein Verfahren zum Laden von Elektrofahrzeugen, insbesondere auf das Laden des Elektrofahrzeugs aus dem Stromnetz oder das Bereitstellen von elektrischer Energie aus der Fahrzeugbatterie an die Ladestation. Dies wird auch als Vehicle-to-Home (V2H) bezeichnet, wenn das Fahrzeug nur lokal Energie für ein Haushaltsnetzwerk (Heimnetzwerk) bereitstellen kann, als Vehicle-to-Load (V2L), wenn das Fahrzeug nur einen einzelnen Verbraucher wie beispielsweise ein E-Bike-Ladegerät oder eine Lampe mit Energie versorgen kann, oder als Vehicle-to-Grid (V2G), wenn das Fahrzeug Energie zurück ins öffentliche Stromnetz einspeisen kann. Die letztgenannte Betriebsart ist nur der Vollständigkeit halber genannt und spielt für die vorliegende Erfindung keine Rolle.

Im Folgenden wird an Stelle von elektrischer Energie der Kürze halber nur von Energie gesprochen, da in dieser Anmeldung nur elektrische Energie betrachtet wird. Für den Betrieb einer V2H-Konfiguration ist eine bidirektionale Ladestation erforderlich. Die Versorgung des Hauses aus der EV-Batterie kann zum Beispiel dazu verwendet werden, um die Menge an Strom, die während Zeitabschnitten mit hohen Strompreisen aus dem Netz bezogen wird, zu reduzieren, insbesondere in Netzen mit dynamischen Strompreisen. Die V2H-Betriebsart ermöglicht es den Verbrauchern auch, ihre Häuser während eines Netzausfalls aus den Batterien ihrer EVs mit Strom zu versorgen.

Im Unterschied dazu ermöglicht die Vehicle-to-Load (V2L) - Betriebsart, dass ein Elektrofahrzeug (EVs) einphasigen Wechselstrom an eine angeschlossene Last liefert, um dessen Energiebedarf zu decken.

Es gibt einige technische Unterschiede zwischen den V2H- und V2L-Betriebsarten, die hauptsächlich in der Art und Weise liegen, wie die Energie übertragen und genutzt wird.

Aktuelle Hausinstallationen sind derzeit als Dreiphasensysteme konzipiert, was einen effizienten Einsatz elektrischer Geräte und eine ausgewogene Verteilung der Lasten ermöglicht. Diese Konfiguration stellt jedoch spezifische Herausforderungen für die Implementierung der V2L- bzw. V2H-Technologie dar.

Aus der FR 3 018 006 ist ein System zur Einspeisung von lokal erzeugter einphasiger elektrischer Energie in ein Heimnetzwerk bekannt. Die Energie wird lokal zum Beispiel von einer Fotovoltaikanlage oder einer Windenergieanlage erzeugt. Das bekannte System weist ein erstes Schaltmittel auf, das dazu dient, das öffentliche Versorgungsnetz von dem Heimnetzwerk zu trennen. Ein zweites Schaltmittel ist dazu vorgesehen, um die einphasige Stromquelle gemäß programmierten Regeln einer Steuereinheit mit einer oder mehreren der Phasen des Heimnetzwerkes zu verbindenden. Eine Ladestation für ein Elektrofahrzeug ist nicht vorgesehen.

Die EP 24 315 350.9 betrifft ein Steuerungsverfahren für eine bidirektionale Ladestation für ein Elektrofahrzeug. Neben dem Ladebetrieb für eine Fahrzeugbatterie sind zwei unterschiedliche Betriebsarten für die V2H-Entladung der Fahrzeugbatterie vorgesehen, nämlich ein Netzfolgebetrieb ("grid-following") und ein Netzbildungsbetrieb ("grid-forming"). Vorliegend ist der Netzbildungsbetrieb von Interesse, bei dem das Heimnetzwerk von dem allgemeinen Versorgungsnetzwerk getrennt ist. Der Netzbildungsbetrieb ist daher bei einem Stromausfall besonders nützlich. Für diese Betriebsart wird vorgeschlagen, dass zunächst in einem V2L-Betriebsmodus eine Pufferbatterie aufgeladen wird, bis die Pufferbatterie einen Ladezustand erreicht, um eine elektronische Steuerung versorgen zu können. Dann wechselt das Verfahren in eine V2H-Betriebsart, in der das Elektrofahrzeug in der Lage ist, ein Heimnetzwerk mit Energie zu versorgen. Der Wechsel zwischen der Ladebetriebsart, in welcher die Batterie des Elektrofahrzeuges aufgeladen wird, und der V2H-Betriebsart wird von einem Benutzer zum Beispiel mit einem an einem Ladestecker angeordneten Schalter ausgelöst.

Trotz der bereits existierenden Konzepte zur Nutzung von EVs als Energiequelle besteht weiterhin der Wunsch nach verbesserten Methoden und Vorrichtungen, die die Nutzung einer EV-Batterie zur Versorgung eines Heimnetzwerks über eine Ladestation weiter erleichtern und die Möglichkeiten dazu erweitern.

### Beschreibung der Erfindung

Zur Lösung dieser Aufgabe schlägt die Erfindung nach einem ersten Aspekt eine bidirektionale Ladeeinrichtung vor, die an eine Hausinstallation angeschlossen ist und die eine Ladestation aufweist, die dazu eingerichtet ist,
- um in einer ersten Betriebsart ein an die Ladestation angeschlossenes Elektrofahrzeug mit 3-phasigem Wechselstrom zu laden,
- um bei Empfang eines Steuersignals einen Netztrennschalter zu betätigen und in eine zweite Betriebsart umzuschalten, in der das Elektrofahrzeug einen Pufferspeicher mit elektrischer Energie versorgt,
- um, wenn der Pufferspeicher einen vorbestimmten Ladezustand erreicht hat, in eine dritte Betriebsart umzuschalten, in der alle drei Phasen der Hausinstallation mit elektrischer Energie aus dem Elektrofahrzeug versorgt werden, um elektrische Energie für an die Hausinstallation angeschlossene Verbraucher bereitzustellen.

Die bidirektionale Ladeeinrichtung ermöglicht auf der einen Seite das Aufladen des Elektrofahrzeuges mit 3-phasigem Wechselstrom und auf der anderen Seite die Verwendung einer einphasigen V2H-Funktionalität des Elektrofahrzeuges, um alle drei Phasen der Hausinstallation mit Strom zu versorgen.

In einer vorteilhaften Weiterbildung weist die Ladestation einen Leistungsschütz auf, der dazu eingerichtet ist, um beim Umschalten von der ersten in die zweite Betriebsart zwei Phasenleiter zwischen dem angeschlossenen Elektrofahrzeug und der Ladestation zu unterbrechen.

Die Umschaltung des Leistungsschützes bewirkt, dass die Batterie des Elektrofahrzeuges unter Mitwirkung eines Wechselrichters zu einer einphasigen Stromquelle wird, die zur Versorgung des isolierten Heimnetzwerkes bereitsteht, das aus der Hausinstallation und daran angeschlossene Verbraucher gebildet ist.

In einer bevorzugten Ausführungsform ist in der bidirektionalen Ladeeinrichtung ein Leistungsschalter vorgesehen, der beim Umschalten von der zweiten in die dritte Betriebsart die drei Phasen der Hausinstallation miteinander verbindet.

Der Leistungsschalter ist von zentraler Bedeutung, um in einem Inselbetrieb alle drei Phasen des Heimnetzwerkes mit Strom zu versorgen.

Mit Vorteil ist in der bidirektionalen Ladeeinrichtung ein Steuerungsrelais vorgesehen, das beim Umschalten von der zweiten in die dritte Betriebsart einen Neutralleiter mit einem Schutzleiter der Hausinstallation koppelt.

Die Kopplung zwischen dem Neutralleiter N und dem Schutzleiter PE stellt sicher, dass Restströme von einer Fehlerstromüberwachungseinrichtung detektiert werden. Das bedeutet, dass unerwünschte elektrische Ströme, die durch einen Defekt in einer elektrischen Isolation oder einem elektrischen Gerät auftreten, von der Fehlerstromüberwachungseinrichtung erkannt werden, die dafür sorgt, dass gegebenenfalls der betroffene Stromkreis unterbrochen wird, um das Risiko eines Stromschlages zu vermeiden. Diese Sicherheitsmaßnahme trägt wesentlich zum sicheren Betrieb von elektrischen Hausinstallationen bei, wodurch Menschen von potenziell tödlichen Stromschlägen geschützt werden. Diese Konfiguration ist insbesondere für komplexe elektrische Installationen wichtig, in denen die Aufrechterhaltung einer stabilen und sicheren Erdung der Installation von entscheidender Bedeutung ist.

Eine zweckmäßige Weiterbildung der Erfindung weist ein Energiemanagement-Modul auf, um das Steuersignal zu senden, das die Umschaltung aus der ersten in die zweite Betriebsart auslöst.

Das Energiemanagement Modul erkennt einerseits einen Stromausfall in dem Versorgungsnetz und trennt die Hausinstallation von dem Versorgungsnetz, um das Heimnetzwerk in einem Inselbetrieb mit Strom aus dem Elektrofahrzeug zu versorgen. Andererseits kann das Energiemanagement Modul die Trennung des Heimnetzwerkes von dem Versorgungsnetz auch dann herbeiführen, wenn zu einem bestimmten Zeitpunkt der Strompreis sehr hoch ist und gleichzeitig die Batterie des Elektrofahrzeuges ausreichend geladen ist und deshalb die Versorgung des Heimnetzwerkes eine Zeit lang während der Hochpreisphase des Stromversorgers übernehmen kann. Dies führt für den Nutzer zu einer Ersparnis bei den Stromkosten und kann wirtschaftlich interessant sein.

Bei einer vorteilhaften Ausführungsform ist der Pufferspeicher dazu eingerichtet, um das Energiemanagement-Modul, den Netztrennschalter und/oder eine Steuereinrichtung in der Ladestation mit Strom zu versorgen.

Der Pufferspeicher stellt sicher, dass wesentliche Komponenten der bidirektionalen Ladeeinrichtung auch bei einem Stromausfall des Versorgungsnetzes mit Strom versorgt werden können, um deren Funktion sicherzustellen. Dadurch wird beispielsweise erreicht, dass die Umschaltung in eine V2L- bzw. V2H-Betriebsart auch bei Stromausfall im Versorgungsnetz durchführbar bleibt.

Mit Vorteil ist in der bidirektionale und Ladeeinrichtung ein Netzteil vorgesehen, das dazu eingerichtet ist, um den Pufferspeicher zu speisen und wahlweise Strom aus dem Elektrofahrzeug oder einem Versorgungsnetz zu beziehen.

Das Netzteil sorgt dafür, dass der Pufferspeicher stets ausreichend geladen ist bzw. wieder aufgeladen wird.

An die bidirektionale Ladeeinrichtung kann ein Batteriespeicher an denjenigen Phasenleiter angeschlossen sein, den der Leistungsschütz beim Umschalten von der ersten in die zweite Betriebsart zwischen dem angeschlossenen Elektrofahrzeug und der Ladestation nicht trennt.

Mit einem optionalen Batteriespeicher, der an die Hausinstallation angeschlossen ist, kann die Betriebsdauer des Heimnetzwerkes im Inselbetrieb zusätzlich unterstützt werden. Der Batteriespeicher stellt der Batterie des Elektrofahrzeuges zusätzliche Speicherkapazität für den Inselbetrieb des Heimnetzwerkes zur Verfügung.

Gemäß einem zweiten Aspekt der Erfindung wird ein Lade- und Versorgungssystem zum bidirektionalen Laden von Elektrofahrzeugen vorgeschlagen, das ein Versorgungsnetz, eine daran angeschlossene Hausinstallation, eine bidirektionale Ladeeinrichtung gemäß dem ersten Aspekt der Erfindung sowie ein an die Ladeeinrichtung angeschlossenes Elektrofahrzeug umfasst.

Mit dem vorgeschlagenen Lade- und Versorgungssystem werden sämtliche Vorteile verwirklicht, die bereits im Zusammenhang mit der bidirektionalen Ladeeinrichtung geschrieben wurden.

Gemäß einem dritten Aspekt der Erfindung wird ein Verfahren zum bidirektionalen Laden eines Elektrofahrzeuges mit einer Batterie an einer bidirektionalen Ladeeinrichtung nach dem 1. Aspekt der Erfindung, die an ein 3-phasiges Versorgungsnetz angeschlossen ist, das zur Versorgung eines Heimnetzwerkes dient, zu welchem eine Hausinstallation gehört. Das Verfahren umfasst
- Aufladen (S1) einer Batterie des Elektrofahrzeuges mittels aller drei Phasen des Versorgungsnetzes,
- Detektion (S2) eines Ausfalls des Versorgungsnetzes,
- Trennen (S3) des Heimnetzwerkes von dem Versorgungsnetz,
- Koppeln (S4) eines Neutralleiters mit einem Schutzleiter der Hausinstallation, und
- Versorgen (S5) aller drei Phasen des Heimnetzwerkes mittels der Batterie des Elektrofahrzeuges, indem die drei Phasenleiter der Hausinstallation miteinander verbunden werden.

Das vorgeschlagene Verfahren zum bidirektionalen Laden eines Elektrofahrzeuges hat den Vorteil, dass die Batterie des Elektrofahrzeuges mit 3-phasigem Wechselstrom geladen werden kann. In einem anderen Betriebszustand dient die Batterie des Elektrofahrzeuges als einphasige Stromquelle für ein Heimnetzwerk, die durch geeignete Schaltmittel in die Lage versetzt ist alle 3 Phasen des Heimnetzwerkes mit Strom zu versorgen.

Gemäß einer vorteilhaften Weiterbildung umfasst das Verfahren weiterhin den Schritt
- Aufladen eines Pufferspeichers, der Komponenten bis auf einen vorbestimmten Ladezustand.

Das Aufladen des Pufferspeichers sorgt dafür, dass die von dem Pufferspeicher mit stromversorgten Komponenten der bidirektionalen Ladeeinrichtung auch bei einem Stromausfall des Versorgungsnetzes funktionsfähig bleiben.

### Kurze Beschreibung der Zeichnung

Nachfolgend wird die Erfindung anhand einer Ausführungsform unter Bezugnahme auf die begleitenden Figuren exemplarisch näher erläutert. Alle Figuren sind rein schematisch und nicht maßstäblich. Es zeigen:
- Fig. 1: eine schematische Darstellung der Architektur eines elektrischen Lade- und Versorgungssystems;
- Fig. 2: das elektrische Lade- und Versorgungssystems aus Figur 1 in größerer Einzelheit; und
- Fig. 3: ein schematisches Flussdiagramm eines erfindungsgemäßen Verfahrens zum Betrieb des Lade- und Entladesystems aus Figur 2.

Gleiche oder ähnliche Elemente sind in den Figuren mit gleichen oder ähnlichen Bezugszeichen versehen.

### Ausführungsbeispiel

Im Folgenden wird der Begriff "Hausinstallation" für die elektrotechnische Infrastruktur in einem Haus oder Gebäude benutzt, während sich der Begriff "Heimnetzwerk" auf die Hausinstallation und die daran angeschlossenen Verbraucher bezieht.

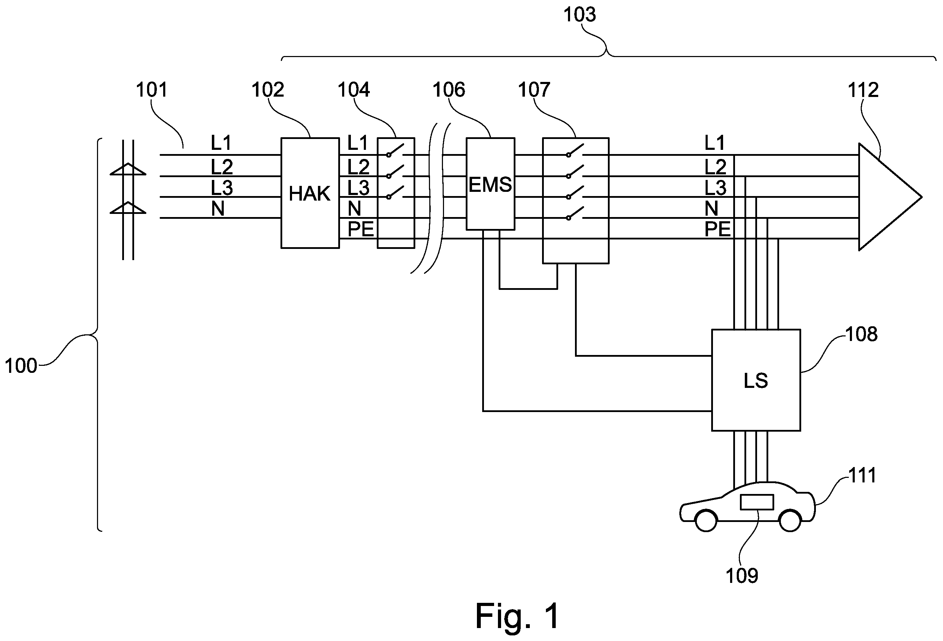

Figur 1 zeigt schematisch die Architektur eines elektrischen Lade- und Versorgungssystems 100. Ein öffentliches Versorgungsnetz 101 liefert Dreiphasenwechselstrom über drei Phasenleiter L1, L2, L3 die jeweils eine sinusförmige Wechselspannung tragen, deren Phasen um 120° zueinander versetzt sind, sowie und einen Neutralleiter N. Die Phasenleiter des Versorgungsunternehmens sind an einen Hausanschlusskasten 102 angeschlossen, der neben den Phasenleitern L1, L2, L3 und dem Neutralleiter N einen mit Erde verbundenen Schutzleiter PE für eine Hausinstallation 103 bereitstellt, welche die elektrotechnische Infrastruktur für daran angeschlossene Verbraucher bereitstellt und gemeinsam mit den Verbrauchern ein Heimnetzwerk bildet. Der Neutralleiter N ermöglicht es sowohl Dreiphasen- als auch Einphasenverbraucher (nicht gezeigt) innerhalb der Hausinstallation 103 zu versorgen, wobei der Neutralleiter N dazu dient, den Wechselstromkreis eines Verbrauchers zu schließen und den Stromfluss zwischen den einzelnen Phasen auszugleichen, wenn die Lasten auf den drei Phasen L1, L2, L3 nicht gleichmäßig verteilt sind. Nachgeschaltet hinter dem Hausanschlusskasten 102 ist ein Sicherungslasttrennschalter 104 angeordnet, der im Falle einer Überlastung die Phasenleiter L1, L2, L3 der Hausinstallation 103 von dem Versorgungsnetz 101 trennt, wobei der Neutralleiter N und der Schutzleiter PE nicht getrennt werden. Ein Energiemanagementmodul 106 sorgt gemäß voreingestellter Regeln für die Umschaltung zwischen unterschiedlichen Betriebsarten des elektrischen Lade- und Versorgungssystems 100, wie weiter unten im Einzelnen noch beschrieben wird. Das Energiemanagementsystem 106 betätigt beispielsweise einen Netztrennschalter 107, um die Hausinstallation 103 von dem Versorgungsnetz 101 zu trennen. Diese Trennung wird über eine mechanische Rückmeldung an das Energiemanagementmodul (EMS) kommuniziert, wodurch an dem Energiemanagementmodul 106 auch bei einem Stromausfall die Information vorliegt, ob der Netztrennschalter 107 geöffnet oder geschlossen ist.

Ganz allgemein gilt, dass ein Netztrennschalter 107 ein spezialisiertes Gerät ist, das in elektrischen Systemen verwendet wird, um die Verbindung zwischen dem Versorgungsnetz 101 und der Hausinstallation 103 zu trennen. Dies kann notwendig sein, um Wartungs- oder Reparaturarbeiten durchzuführen oder um unerwünschte Stromflüsse zu verhindern. Der Netztrennschalter 107 bietet eine präzise und sichere Methode zur Trennung von Netzverbindungen und stellt sicher, dass keine elektrische Verbindung besteht, die eine Gefahr für Personal oder Geräte darstellt. Die mechanische Rückmeldung an das Energiemanagementmodul (EMS) 106 stellt sicher, dass die Trennung korrekt überwacht und bei Bedarf angepasst wird. Dies verbessert die Zuverlässigkeit und Effizienz des gesamten Stromversorgungssystems.

Weiterhin ist in dem elektrischen Lade- und Versorgungssystems 100 eine Ladestation 108 vorgesehen, die dazu eingerichtet ist, um gemäß einer ersten Betriebsart eine wiederaufladbare Batterie 109 eines elektrischen Fahrzeugs (EV) 111 mit Energie zu versorgen. Bei einem ordnungsgemäßen Betrieb des Versorgungsnetzes 101 erfolgt die Aufladung der Batterie 109 mit 3-phasigem Wechselstrom. An Bord des EV 111 befindet sich ein bidirektionaler Wechselrichter (nicht dargestellt), der den 3-phasigen Wechselstrom in einen Ladestrom für die Batterie 109 umwandelt. Mit dem Dreieck 112 ist die Fortsetzung der Hausinstallation 103 und daran angeschlossene Verbraucher symbolisiert, die in Figur 1 nicht im Einzelnen dargestellt sind.

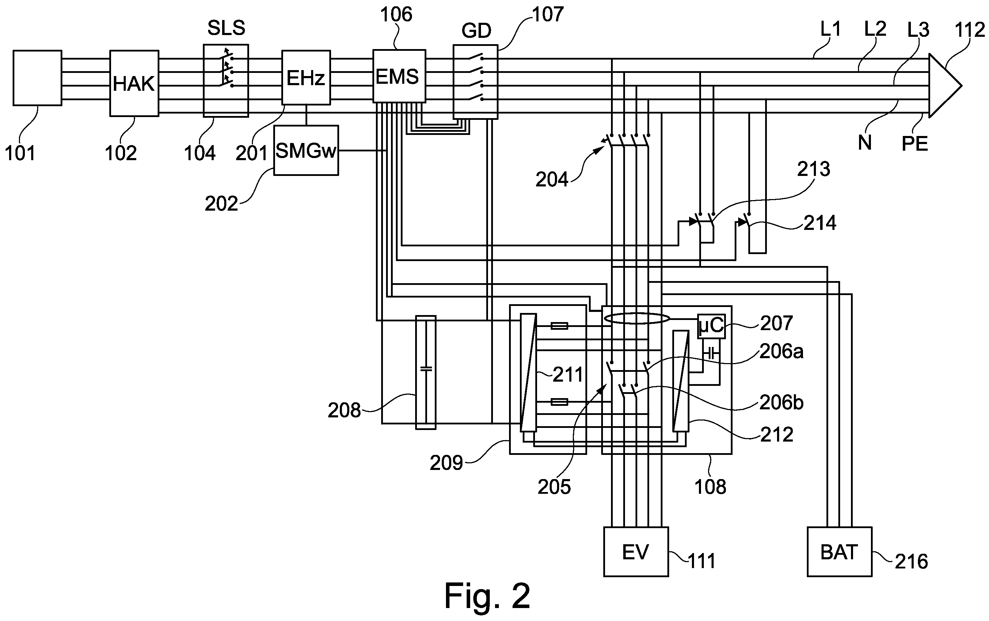

Figur 2 zeigt das Lade- und Versorgungssystems 100 in größerer Einzelheit. Die Phasenleiter L1, L2, L3 sowie der Neutralleiter N des öffentlichen Versorgungsnetzes 101 sind an den Hausanschlusskasten 102 angeschlossen, der zusätzlich einen mit Erde verbundenen Schutzleiter PE bereitstellt. Der Sicherungslasttrennschalter 104 trennt die Phasenleiter L1, L2, L3 im Falle einer Überlastung von der Hausinstallation 103. Ein elektrischer Haushaltszähler 201 ermittelt wie viel elektrische Energie von dem Versorgungsnetz 101 in das Heimnetzwerk fließt bzw. zu den an die Hausinstallation angeschlossenen Verbrauchern. Ein mit dem elektrischen Haushaltszähler 201 verbundenes Smart Meter Gateway 202 protokolliert zu welchen geltenden Preisen die elektrische Energie geliefert wurde. Beispielsweise können die Preise zu bestimmten Tageszeiten, wenn viel elektrische Energie aus regenerativen Quellen zur Verfügung steht oder der Energiebedarf im Versorgungsnetz 101 niedrig ist, niedriger sein als in Zeiten von hohem Energiebedarf und oder kleinem Energieangebot. Dieser Umstand kann ausgenutzt werden, um beispielsweise ein Elektrofahrzeug 111 dann zu laden, wenn der Strompreis niedrig ist. Um Strompreisschwankungen wirtschaftlich zu nutzen, ist das Energiemanagementmodul 106 vorgesehen, das über eine Verbindung 203 mit dem Smart Meter Gateway 202 Daten austauscht. Den Energiemanagementmodul 106 ist der Netztrennschalter 107 nachgeschaltet, der eine Trennung der Hausinstallation 103 von dem öffentlichen Versorgungsnetz 101 ermöglicht, um unerwünschte Stromflüsse ins Versorgungsnetz 101 zu verhindern oder auch um Arbeiten innerhalb der Hausinstallation 103 durchführen zu können. Ausgehend von dem Netztrennschalter 107 führen die Phasenleiter L1, L2, L3, der Neutralleiter N und der Schutzleiter PE in das Heimnetzwerk, an das neben anderen Verbrauchern über einen Leistungsschutzschalter 204 auch die Ladestation 108 angeschlossen ist, wobei die Ladestation 108 das Laden des Elektrofahrzeuges 111 mit 3-phasigem Wechselstrom gestattet. Der Leistungsschutzschalter 204 ist im Normalbetrieb, das heißt wenn kein Kurzschluss oder keine Überlastung vorliegt, immer geschlossen. Innerhalb der Ladestation 108 ist ein Leistungsschütz 205 angeordnet, der im Ladebetrieb der Ladestation 108, wenn die Ladestation 108 die Batterie 109 des Elektrofahrzeuges 111 auflädt, geschlossen ist. Der Leistungsschütz 205 weist zwei gekoppelte Kontaktpaare 206a,b auf. Das erste Kontaktpaar 206a verbindet und trennt gleichzeitig den Phasenleiter L1 den Neutralleiter N. Das zweite Kontaktpaar 206b verbindet und trennt gleichzeitig die Phasenleiter L2 und L3. Die Ladestation 108 weist einen Mikrocomputer 207 auf, der Fehlerströme überwacht und bei einem Kurzschluss oder einer Überlastung der Ladestation 108 den Leistungsschütz 205 öffnet, um den Ladevorgang zu beenden. Die elektrische Energieversorgung des Mikrocomputers 207 erfolgt mittels einer Pufferbatterie 208, die über ein Netzteil 209 kontinuierlich geladen wird. Das Netzteil 209 ist zu beiden Seiten des Leistungsschützes 205 an den Phasenleiter L1 angeschlossen und wandelt mit einem AC/DC-Wandler 211 Wechselstrom in einen Ladegleichstrom für die Pufferbatterie 208 um. Die von dem AC/DC-Wandler 211 erzeugte Gleichspannung versorgt auch einen DC/DC-Wandler 212, dessen Ausgangsstrom dem Mikrocomputer 207 versorgt.

Durch diese Konfiguration ist eine duale Stromversorgung für das Energiemanagementmodul 106, die Ladestation 108 und den Netztrennschalter 107 sichergestellt. D.h. unabhängig davon, ob die Energieversorgung über das Versorgungsnetz 101 oder von der Batterie 109 des elektrischen Fahrzeuges 111 erfolgt, ist die Stromversorgung des Netzteiles 209 und somit der Betrieb des Energiemanagementmoduls 203, der Ladestation 108 und des Netztrennschalters 107 gesichert. Somit ist sichergestellt, dass bei einem Ausfall des Versorgungsnetzes 101 das Energiemanagementmodul 203 und des Netztrennschalters 107 betriebsfähig bleiben und insbesondere eine Trennung der Hausinstallation 103 von dem Versorgungsnetz 101 bewirken. Das Lade- und Entladesystem 100 ist so eingerichtet, dass bei einem Ausfall des Versorgungsnetzes 101 die Batterie mit dem bidirektionalen Wechselrichter an Bord des Elektrofahrzeuges 111 alle drei Phasenleiter L1, L2, L3 des Heimnetzwerks 103 mit elektrischer Energie versorgen kann. Zu diesem Zwecke ist ein Leistungsschalter 213 vorgesehen, der die Phasenleiter L2, L3 mit dem Phasenleiter L1 der Hausinstallation 103 verbindet, sodass alle Verbraucher in dem Heimnetzwerk mit elektrischer Energie versorgt werden können, unabhängig davon an welche Phase der Hausinstallation 103 der Verbraucher angeschlossen ist.

Aus Sicherheitsgründen ist darüber hinaus ein Überwachungsrelais 214 vorgesehen, dass als Sicherheitseinrichtung wirksam ist, indem das Überwachungsrelais 214 immer dann eine direkte Verbindung zwischen dem Neutralleiter N und dem Schutzleiter PE herstellt, wenn der Leistungsschalter 213 die drei Phasenleiter L1, L2, L3 miteinander verbindet. Die von den Überwachungsrelais 214 hergestellte Verbindung zwischen dem Schutzleiter PE und dem Neutralleiter N stellt sicher, dass Fehlerströme, die durch eine Fehlerstromschutzeinrichtung detektiert werden, unmittelbar an die Erde abgeführt werden, wodurch das Risiko von Stromschlägen verringert und die Gesamtzuverlässigkeit und -sicherheit der elektrischen Infrastruktur verbessert wird.

Die von dem Überwachungsrelais 214 bewirkte Kopplung zwischen dem Neutralleiter N und dem Schutzleiter PE ist in komplexen elektrischen Installationen besonders wichtig, in denen die Aufrechterhaltung eines stabilen und sicheren Erdungssystems entscheidend ist.

Bei einer Weiterbildung des Lade- und Entladesystems 100 ist optional ein Batteriespeicher 216 vorgesehen, der mit einphasigem Wechselstrom aufladbar ist und gegebenenfalls die Batterie 109 des Elektrofahrzeuges 111 bei der Versorgung des Heimnetzwerkes 103 unterstützt.

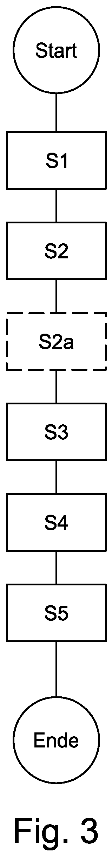

Die Funktionsweise des Lade- und Versorgungssystems 100 wird im Folgenden beschrieben mit Bezug auf die Figuren 2 und 3 beschrieben, die ein ein schematisches Flussdiagramm eines Verfahrens zum Betrieb des Lade- und Entladesystems 100 zeigt. In einer Ausgangssituation wird das Elektrofahrzeug 111 gemäß einer ersten Betriebsart des Lade- und Versorgungssystems 100 mit 3-phasigem Wechselstrom geladen. In der ersten Betriebsart sind die Kontaktpaare 206a,b des Leistungsschützes 205 geschlossen. Im Falle eines Ausfalls des Versorgungsnetzes 101 wird die Hausinstallation nicht mehr mit elektrischer Energie versorgt und der Ladevorgang des Elektrofahrzeuges 111 endet. Das Energiemanagementmodul 106, dass aus dem Pufferspeicher 208 weiterhin mit Energie versorgt ist, detektiert den Stromausfall und veranlasst den Netztrennschalter 107 zur Öffnung, um die Heiminstallation 103 von dem Versorgungsnetz 101 zu trennen. Der Netztrennschalter 107 gibt eine mechanische Rückmeldung an das Energiemanagement Modul 106 über die erfolgte Trennung. Sobald die Trennung zwischen der Hausinstallation 103 und dem Versorgungsnetz 101 vollzogen ist, öffnet das zweite Kontaktpaar 206b und trennt die Phasenleiter L2 und L3 des Elektrofahrzeuges 111 von der Hausinstallation 103. Dieser Zustand entspricht der zweiten Betriebsart (V2L), in welcher das Netzteil 209 den Pufferspeicher 208 auflädt, wenn bzw. sobald das Elektrofahrzeug an die Ladestation 108 angeschlossen ist. Nachdem der Pufferspeicher 208 einen vorbestimmten Ladezustand erreicht hat, sendet das Energiemanagement Modul 106 ein Signal an den Leistungsschalter 213, das bewirkt, dass der Leistungsschalter 213 den Phasenleiter L1 mit den Phasenleitern L2 und L3 innerhalb der Hausinstallation miteinander verbindet. Außerdem sendet das Energiemanagementmodul 106 ein Signal an das Steuerungsrelais 214, welches das das Steuerungsrelais 214 dazu veranlasst, den Neutralleiter N mit dem Schutzleiter PE zu koppeln. Dieser Zustand markiert nun die dritte Betriebsart (V2H), in welcher das Elektrofahrzeug 111 alle 3 Phasen der von dem Versorgungsnetz 101 getrennten Hausinstallation 103 mit Energie versorgt. In diesem Zustand wird das Heimnetzwerk in einem Inselbetrieb betrieben. In Ausführungsformen mit einem Batteriespeicher 216 ist der Batteriespeicher 216 zwischen dem Leistungsschütz 205 und dem Leistungsschalter 213 über den Phasenleiter L1, den Neutralleiter N und den Schutzleiter PE mit der Hausinstallation 103 gekoppelt. Der Batteriespeicher 216 ist dadurch in der Lage, sowohl in die zweite als auch die dritte Betriebsart (V2L bzw. V2H) zu unterstützen.

Wenn das Versorgungsnetz 101 wieder ordnungsgemäß in Betrieb ist und/oder wenn ein vorgegebener niedrigster Ladezustand der Batterie 109 des Elektrofahrzeuges 111 erreicht ist, beendet das Energiemanagement Modul 106 die dritte Betriebsart (V2H) und kehrt in die ersten Betriebsart (Aufladung des Elektrofahrzeuges) zurück. Hierfür trennt das Steuerungsrelais 214 die Kopplung zwischen dem Neutralleiter N und dem Schutzleiter PE. Der Leistungsschalter 213 öffnet, sodass die Phasenleiter L1, L2, L3 in der Hausinstallation wieder voneinander getrennt sind. Danach schließt das zweite Kontaktpaar 206b des Leistungsschützes 205. Nachfolgend verbindet der Netztrennschalter 107 die Hausinstallation 103 mit dem Versorgungsnetz 101 womit die erste Betriebsart wieder erreicht ist bis die Batterie 109 des Elektrofahrzeuges vollständig aufgeladen ist. Bei einem anderen Ausführungsbeispiel kann auch ein anderer Phasenleiter zwischen dem Elektrofahrzeug 111 und dem Heimnetzwerk 103 verbunden sein.

Gemäß einem Ausführungsbeispiel kann das Energiemanagement Modul 106 das Umschalten aus der ersten Betriebsart in die dritte Betriebsart beispielsweise auch dann bewirken, wenn der momentane Strompreis einen vorbestimmten Grenzpreis überschreitet. Der Übergang aus der ersten in die dritte Betriebsart kann direkt erfolgen, wenn der Pufferspeicher 208 ausreichend aufgeladen ist.

Das erfindungsgemäße Lade- und Entladesystem 100 gestattet es eine 3-phasige Hausinstallation 103 im Inselbetrieb aus einem einphasigen Batteriespeicher mit elektrischer Energie zu versorgen. Dabei versorgt die Energie aus dem Batteriespeicher alle drei Phasen L1, L2, L3 in der Hausinstallation 103 unter Einsatz des Lade- und Entladesystems 100 mit Strom. Der Batteriespeicher kann dabei zum Beispiel die Batterie 109 aus einem Elektrofahrzeug 111 oder ein in dem Heimnetzwerk fest installierter Batteriespeicher 214 sein.

Ausgangssituation für das erfindungsgemäße Verfahren zum bidirektionalen Laden eines Elektrofahrzeuges ist das Aufladen der Batterie 109 des Elektrofahrzeuges 111 mittels aller drei Phasen des Versorgungsnetzes 101 (Schritt S1). In einem Schritt S2 detektiert das Energiemanagement Modul 106 einen Stromausfall des Versorgungsnetzes 101 und veranlasst in einem Schritt S3 den Netztrennschalter 107 zur Öffnung, um die Hausinstallation 103 von dem Versorgungsnetz 101 zu trennen. In dem konkreten Ausführungsbespiel aus Figur 2 wird der Schritt S3 so umgesetzt, dass das zweite Kontaktpaar 206b des Leistungsschützes 205 öffnet und die Phasenleiter L2 und L3 des Elektrofahrzeuges von der Hausinstallation 103 trennt. In einem Schritt S4 koppelt das Steuerungsrelais 214 den Neutralleiter N mit dem Schutzleiter PE. In einem Schritt S5 verbindet der Leistungsschalter 213 den Phasenleiter L1 mit den Phasenleiter L2 und L3 innerhalb der Hausinstallation 103.

In einem weiteren Ausführungsbeispiel ist zwischen Schritt S2 und Schritt S3 als Schritt S2a vorgesehen, dass das Netzteil 209 den Pufferspeicher 208 bis auf einen vorbestimmten Ladezustand auflädt. Erst wenn dieser vorbestimmte Ladezustand erreicht ist, dann erfolgt der Übergang zu Schritt S3. Der optionale Schritt S2a ist in Figur 3 gestrichelt dargestellt.

**Bezugszeichenliste**

| | | | |
|---|---|---|---|
| 100 | Lade- und Versorgungssystem | | |
| 101 | Versorgungsnetz | | |
| 102 | Hausanschluss | | |
| 103 | Hausinstallation | | |
| 104 | Sicherungslasttrennschalter | | |
| | | | |
| 106 | Energiemanagementmodul | | |
| 107 | Netztrennschalter | | |
| 108 | Ladestation | | |
| 109 | Batterie | | |
| | | | |
| 111 | Elektrofahrzeug | | |
| 112 | Fortsetzung der Hausinstallation | | |
| | | | |
| 201 | Haushaltszähler | | |
| 202 | Smart Meter Gateway (SMG) | | |
| 203 | Verbindung zwischen EMS und SMG | | |
| 204 | Leistungsschutzschalter | | |
| | | | |
| 205 | Leistungsschütz | | |
| 207 | Mikrocomputer | | |
| 208 | Pufferbatterie | | |
| 209 | Netzteil | | |
| | | | |
| 211 | AC/DC-Wandler | | |
| 212 | DC/DC-Wandler | | |
| 213 | Leistungsschalter | | |
| 214 | Uberwachungsrelais | | |
| | | | |
| 216 | Batteriespeicher | | |

## Patentansprüche

1. Bidirektionale Ladeeinrichtung, die an eine Hausinstallation (103) angeschlossen ist, mit einer Ladestation (108), die dazu eingerichtet ist,
- um in einer ersten Betriebsart ein an die Ladestation angeschlossenes Elektrofahrzeug (111) mit 3-phasigem Wechselstrom zu laden,
- um bei Empfang eines Steuersignals einen Netztrennschalter (107) zu betätigen und in eine zweite Betriebsart (V2L) umzuschalten, in der das Elektrofahrzeug einen Pufferspeicher (208) mit elektrischer Energie versorgt,
- um, wenn der Pufferspeicher (208) einen vorbestimmten Ladezustand erreicht hat, in eine dritte Betriebsart (V2H) umzuschalten, in der alle drei Phasen der Hausinstallation mit elektrischer Energie aus dem Elektrofahrzeug (111) versorgt werden, um elektrische Energie für an die Hausinstallation (103) angeschlossene Verbraucher bereitzustellen.

2. Bidirektionale Ladeeinrichtung nach Anspruch 1, **dadurch gekennzeichnet, dass** die Ladestation einen Leistungsschütz (205) aufweist, der dazu eingerichtet ist, um beim Umschalten von der ersten in die zweite Betriebsart zwei Phasenleiter (L2,L3) zwischen dem angeschlossenen Elektrofahrzeug und der Ladestation zu unterbrechen.

3. Bidirektionale Ladeeinrichtung nach Anspruch 1 oder 2, **dadurch gekennzeichnet, dass** ein Leistungsschalter (204) vorgesehen ist, der beim Umschalten von der zweiten in die dritte Betriebsart die drei Phasenleiter (L1,L2,L3) der Hausinstallation (103) miteinander verbindet.

4. Bidirektionale Ladeeinrichtung nach einem der vorstehenden Ansprüche, **dadurch gekennzeichnet, dass** ein Steuerungsrelais (213) vorgesehen ist, das beim Umschalten von der zweiten in die dritte Betriebsart einen Neutralleiter (N) mit einem Schutzleiter (PE) der Hausinstallation (103) koppelt.

5. Bidirektionale Ladeeinrichtung nach einem der vorstehenden Ansprüche, **dadurch gekennzeichnet, dass** ein Energiemanagement-Modul (106) vorgesehen ist, um das Steuersignal zu senden, das die Umschaltung aus der ersten in die zweite Betriebsart auslöst.

6. Bidirektionale Ladeeinrichtung nach einem der vorstehenden Ansprüche, **dadurch gekennzeichnet, dass** der Pufferspeicher (208) dazu eingerichtet ist, um das Energiemanagement-Modul (106), den Netztrennschalter (107) und/oder eine Steuereinrichtung (207) in der Ladestation (108) mit Strom zu versorgen.

7. Bidirektionale Ladeeinrichtung nach einem der vorstehenden Ansprüche, **dadurch gekennzeichnet, dass** ein Netzteil (209) vorgesehen ist, das dazu eingerichtet ist, um den Pufferspeicher (208) zu speisen und wahlweise Strom aus dem Elektrofahrzeug (111) oder einem Versorgungsnetz (101) zu beziehen.

8. Bidirektionale Ladeeinrichtung nach einem der vorstehenden Ansprüche, **dadurch gekennzeichnet, dass** ein Batteriespeicher (216) an denjenigen Phasenleiter (L1) angeschlossen ist, den der Leistungsschütz (205) beim Umschalten von der ersten in die zweite Betriebsart zwischen dem angeschlossenen Elektrofahrzeug (111) und der Ladestation (108) nicht trennt.

9. Lade- und Versorgungssystem zum bidirektionalen Laden von Elektrofahrzeugen (111), das ein Versorgungsnetz (101), eine daran angeschlossene Hausinstallation (103), eine bidirektionale Ladeeinrichtung nach einem der vorstehenden Ansprüche sowie ein an die Ladeeinrichtung angeschlossenes Elektrofahrzeug (111) umfasst.

10. Verfahren zum bidirektionalen Laden eines Elektrofahrzeuges (111) mit einer Batterie (109) an einer bidirektionalen Ladeeinrichtung nach einem der Ansprüche 1 bis 8, die an ein 3-phasiges Versorgungsnetz (101) angeschlossen ist, das zur Versorgung eines Heimnetzwerkes dient, zu welchem eine Hausinstallation (103) gehört, wobei das Verfahren umfasst
- Aufladen (S1) einer Batterie (109) des Elektrofahrzeuges (111) mittels aller drei Phasen des Versorgungsnetzes (101),
- Detektion (S2) eines Ausfalls des Versorgungsnetzes,
- Trennen (S3) des Heimnetzwerkes von dem Versorgungsnetz,
- Koppeln (S4) eines Neutralleiters (N) mit einem Schutzleiter (PE) der Hausinstallation, und
- Versorgen (S5) aller drei Phasen des Heimnetzwerkes mittels der Batterie (109) des Elektrofahrzeuges, indem die drei Phasenleiter (L1,L2,L3) der Hausinstallation miteinander verbunden werden.

11. Verfahren nach Anspruch 10, **dadurch gekennzeichnet, dass** das Verfahren weiterhin umfasst
- Aufladen (S2a) eines Pufferspeichers (208), der Komponenten bis auf einen vorbestimmten Ladezustand.
